# FASCICULE DE BREVET EUROPEEN

(11) **EP 3 615 848 B1**
(45) Date de publication et mention de la délivrance du brevet: **14.04.2021**
(21) Numéro de dépôt: 18722441.5
(22) Date de dépôt: 26.04.2018
(51) Int. Cl.: F16H 57/04, F16H 57/08

(54) **PORTE-SATELLITES A CAGE POUR UN REDUCTEUR DE VITESSE A TRAIN EPICYCLOÏDAL**
KÄFIGPLANETENTRÄGER FÜR EINE DREHZAHLMINDERUNGSEINHEIT MIT EINEM PLANETENRADGETRIEBE
CAGE PLANET CARRIER FOR A SPEED-REDUCING UNIT WITH AN EPICYCLIC GEAR TRAIN

(30) Priorité: 27.04.2017 FR 1753669
(43) Date de publication de la demande: 04.03.2020
(73) Titulaire: Safran Transmission Systems, 92700 Colombes (FR)
(72) Inventeur: DI GIOVANNI, Jean-Charles, Michel, Pierre, 77550 Moissy-Cramayel (FR); DOMBEK, Alexis, Claude, Michel, 77550 Moissy-Cramayel (FR)
(74) Mandataire: Gevers & Orès
(86) Numéro de dépôt international: PCT/EP2018/060804
(87) Numéro de publication internationale: WO 2018/197645

(56) Documents cités:
- EP-A1- 1 703 174
- EP-A1- 2 615 335
- US-A1- 2004 147 361
- US-A1- 2015 247 566

## Description

### Domaine de l'invention

La présente invention concerne notamment un porte-satellites pour un réducteur de vitesse à train épicycloïdal, ce porte-satellites comportant une cage de réception du solaire et des satellites du réducteur.

### Etat de la technique

L'état de la technique comprend notamment le document US-A1-2015/0247566.

Un réducteur de vitesse à train épicycloïdal d'une turbomachine d'aéronef comprend classiquement un solaire accouplé à un premier arbre et une couronne s'étendant autour du solaire. Des satellites sont disposés entre le solaire et la couronne et sont engrenés avec eux et portés par un porte-satellites accouplé à un second arbre.

Il existe plusieurs types de porte-satellites. La figure 1 illustre un porte-satellites 10 à rouet en porte-à-faux, décrit dans la demande FR-A1-3 036 763. Ce porte-satellites 10 comprend un corps cylindrique 12 destiné à être accouplé au second arbre et relié à une extrémité longitudinale à une paroi annulaire 14 de support d'axes 16 parallèles de rotation des satellites 18. Les axes 16 sont régulièrement répartis autour de l'axe A de rotation du porte-satellites et sont solidaires à l'une de leurs extrémités longitudinales de la paroi annulaire 14 précitée. Un rouet 20 est rapporté et fixé à leurs extrémités longitudinales opposées et fixées à ces dernières. Ce rouet 20 comprend des moyens de lubrification à la fois des paliers montés entre les axes 16 et les satellites 18, et des dents d'engrènement des satellites 18 et du solaire 22.

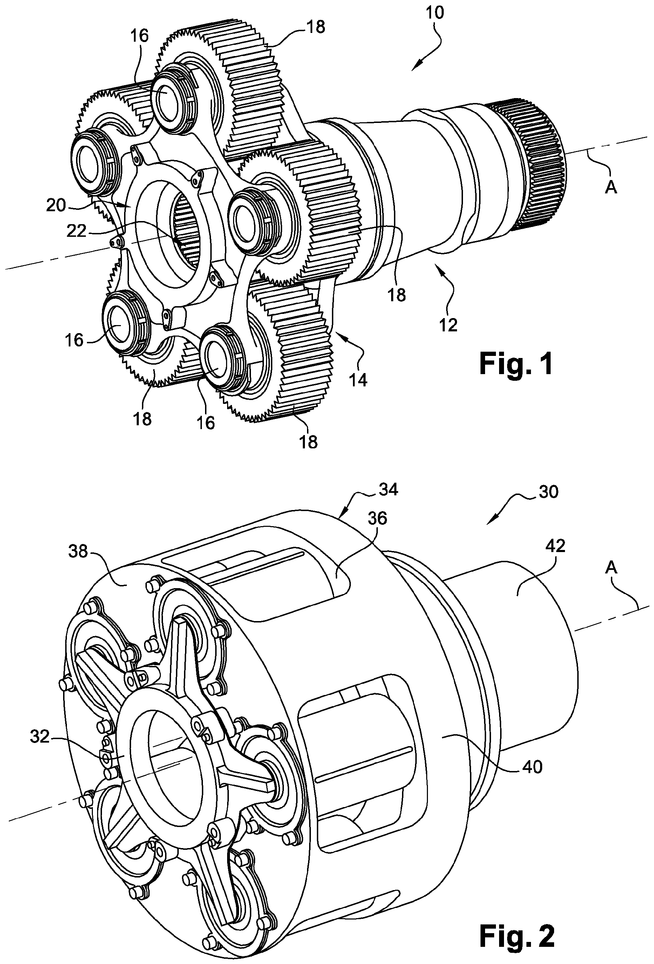

La figure 2 illustre une autre technologie de porte-satellites 30 à cage, le rouet 32 étant rapporté sur la cage 34 et n'étant donc pas monté en porte-à-faux. La cage 34 comprend deux parois annulaires 36, 38 sensiblement parallèles et coaxiales et une paroi cylindrique 40 reliant les parois annulaires 36, 38 à leur périphérie externe. Une première 36 des parois annulaires est reliée au corps 42 précité et la seconde 38 reçoit le rouet 32. Comme dans le cas précédent, ce rouet 32 comprend des moyens de lubrification à la fois des paliers montés entre les axes et les satellites, et des dents d'engrènement des satellites et du solaire.

Cette seconde technologie, de porte-satellites à cage, est avantageuse dans la mesure où le rouet reprend moins d'efforts et est donc moins sollicité en fonctionnement. Par ailleurs, le montage du rouet est ici plus aisé et nécessite des outillages moins complexes que pour un porte-satellites à rouet en porte-à-faux.

Cependant, un porte-satellites à cage de la technique actuelle est relativement encombrant en direction axiale. Le rouet rapporté sur la cage du porte-satellites est en outre soumis à des phénomènes d'usure de contact (*fretting*) au niveau de ses interfaces avec les autres pièces, qui limitent sa durée de vie.

La présente invention propose un perfectionnement à cette seconde technologie, qui apporte une solution simple, efficace et économique à au moins un de ces problèmes.

### Exposé de l'invention

Conformément à l'invention, on parvient à cet objectif avec un porte-satellites pour un réducteur de vitesse à train épicycloïdal de turbomachine, ledit porte-satellites comprenant une cage définissant un espace interne de montage d'un solaire central d'axe A de rotation et d'une rangée annulaire de satellites disposés autour de l'axe A et engrenés avec ledit solaire, ledit solaire comportant des moyens d'accouplement à un premier arbre, ladite cage comportant deux parois annulaires sensiblement parallèles centrées sur ledit axe A et une paroi cylindrique reliant lesdites parois annulaires à leur périphérie externe, une première desdites parois annulaires étant reliée à un corps sensiblement cylindrique comportant des moyens d'accouplement à un second arbre, caractérisé en ce qu'une seconde desdites parois annulaires est formée d'une seule pièce avec des moyens de lubrification, qui comprennent une gorge annulaire de réception d'huile formée dans ladite seconde paroi et s'étendant à la périphérie d'une ouverture centrale centrée sur l'axe A de la seconde paroi, ladite gorge annulaire débouchant radialement vers l'intérieur.

L'intégration des moyens de lubrification directement dans la cage permet de supprimer le rouet de la technique antérieure et de ce fait de réduire l'encombrement axial du porte-satellites.

Le porte-satellites selon l'invention peut comprendre une ou plusieurs des caractéristiques suivantes, prises isolément les unes des autres, ou en combinaison les unes avec les autres :
- lesdits moyens de lubrification sont formés dans au moins une surépaisseur axiale de ladite seconde paroi annulaire ;
- ladite gorge est en communication fluidique avec des canaux et des conduits formés dans ladite seconde paroi et s'étendant radialement vers l'extérieur depuis ladite gorge ;
- lesdits canaux ont leurs extrémités radialement externes qui sont raccordées à des extrémités longitudinales de gicleurs de lubrifiant, les gicleurs de lubrifiant s'étendant sensiblement parallèlement audit axe A ;
- lesdits conduits ont leurs extrémités radialement externes qui sont raccordées à des extrémités radiales internes de tubes d'alimentation en lubrifiant desdits satellites ;
- chacun desdits tubes est monté dans un alésage radial de ladite seconde paroi et traverse un axe de support d'un desdits satellites ;
- chacun desdits tubes comprend une fente longitudinale ou en ensemble de perçages en communication avec une cavité interne dudit axe de support ;
- chacun desdits tubes traversent un couvercle rapporté et fixé sur ladite seconde paroi, ledit couvercle supportant une extrémité longitudinale dudit axe de support ; et
- des ailettes sensiblement radiales sont disposées dans ladite gorge ; ces ailettes facilitent l'écoulement radial de lubrifiant depuis la périphérie interne de la gorge jusqu'à sa paroi de fond.

La présente invention concerne également une turbomachine comporte un réducteur de vitesse à train épicycloïdal dont le porte-satellites est tel que décrit ci-dessus.

La turbomachine peut comprendre des moyens d'alimentation en lubrifiant de ladite gorge, qui comprennent une série d'injecteurs qui sont disposés autour dudit axe A et qui traversent ladite ouverture. Les injecteurs sont de préférence configurés pour pulvériser du lubrifiant radialement vers l'extérieur directement dans ladite gorge.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en perspective d'un porte-satellites à rouet en porte-à-faux de la technique antérieure,
- la figure 2 est une vue schématique en perspective d'un porte-satellites à cage,
- la figure 3 est une vue schématique en perspective d'un porte-satellites à cage selon l'invention,
- les figures 4 et 5 sont des vues schématiques partielles en coupe axiale du porte-satellites de la figure 2 ;
- la figure 6 est une vue schématique en perspective d'un tube d'alimentation du porte-satellites de la figure 2 ; et
- la figure 7 est autre vue schématique partielle en coupe axiale du porte-satellites de la figure 2 ainsi que de moyens d'alimentation en lubrifiant de ses moyens de lubrification.

### Description détaillée d'un mode de réalisation de l'invention

Les figures 1 et 2 ont été décrites dans ce qui précède.

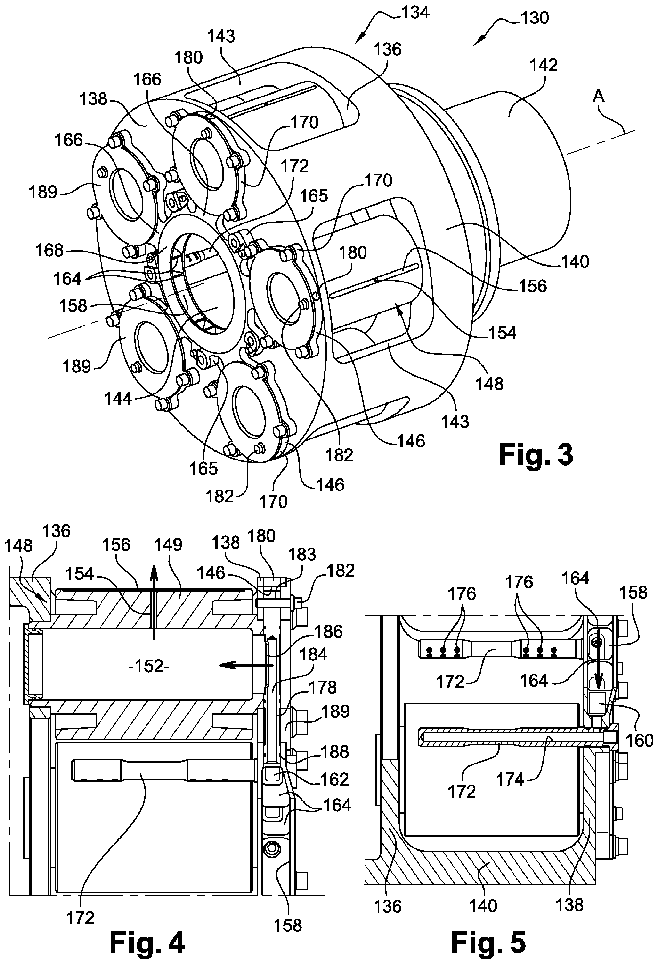

La figure 3 montre un porte-satellites 130 pour un réducteur à train épicycloïdal de turbomachine d'aéronef. Ce porte-satellites 130 est du type à cage 134, la cage comportant deux parois annulaires 136, 138 coaxiales et reliées à leur périphérie par une paroi cylindrique 140.

La paroi annulaire 136 est solidaire d'un corps 142 sensiblement cylindrique, partiellement visible, comportant des moyens d'engrènement avec un arbre tel qu'un arbre de soufflante de la turbomachine. Les moyens d'accouplement sont par exemple des cannelures longitudinales du type de celles visibles à la figure 1.

Dans l'exemple représenté, la paroi cylindrique 140 est ajourée et comprend des lumières 143 traversantes en direction radiale.

La paroi 138 comprend une ouverture centrale 144 centrée sur l'axe A et une série d'orifices 146 régulièrement répartis autour de l'axe A, l'ouverture 144 et les orifices 146 étant traversants en direction axiale.

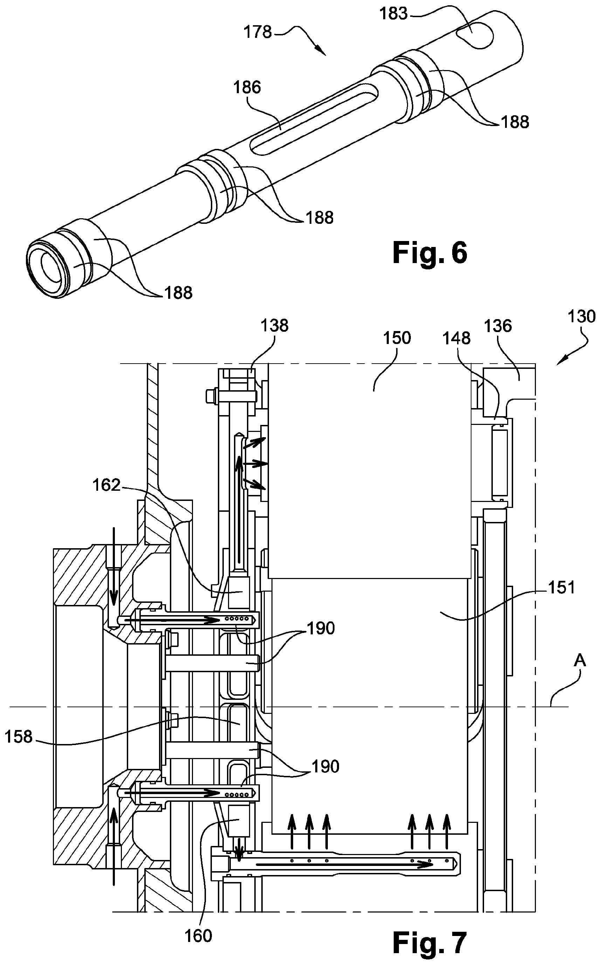

Les orifices 146 servent au montage des axes 148 de rotation des satellites 150 schématiquement représentés à la figure 7. Les axes 148 sont parallèles à l'axe A et sont montés dans la cage 134 par translation axiale en passant par les orifices 146. Ils sont fixés à leurs extrémités longitudinales sur les parois 136, 138, respectivement. Comme cela est visible à la figure 4, dont le plan de coupe traverse axialement un axe 148, cet axe 148 est solidaire d'un palier lisse 149 autour duquel est monté le satellite 150. L'axe 148 est creux et comprend une cavité cylindrique interne 152. L'axe 148 et le palier 149 sont traversés par au moins un conduit radial 154 qui débouche à son extrémité radialement interne dans la cavité 152, et à son extrémité radialement externe dans une rainure longitudinale 156 de la périphérie du palier (figures 3 et 4).

Bien que cela ne soit pas visible, les satellites 150 montés à rotation sur les axes 148 ont leurs périphéries externes qui traversent en partie les lumières 143 en vue de leur engrènement avec une couronne externe du réducteur destinée à entourer la cage 134.

Les satellites 150 engrènent avec le solaire 151 qui comprend des cannelures rectilignes internes d'accouplement à un autre arbre tel qu'un arbre de turbine.

L'ouverture centrale 144 est délimitée extérieurement par une partie annulaire surépaissie de la paroi 138 dans laquelle est formée une gorge annulaire 158. Cette gorge 158 s'étend autour de l'axe A et débouche radialement vers l'intérieur. Sa paroi de fond radialement externe comprend des orifices en communication fluidique avec des canaux radiaux 160 d'une part, et des conduits radiaux 162 d'autre part.

À l'intérieur de la gorge 158 peuvent être disposées des ailettes 164 sensiblement radiales pour faciliter l'écoulement radial de lubrifiant depuis la périphérie interne de la gorge jusqu'à sa paroi de fond et les orifices précités.

Dans l'exemple représenté, le nombre de canaux 160 est égal au nombre de conduits 162 qui est égal au nombre d'axes 148 et de satellites 150. Ce nombre est ici de cinq. Les canaux 160 sont régulièrement répartis autour de l'axe A et les conduits 162 sont régulièrement répartis autour de l'axe A, chaque conduit 162 étant disposé entre deux canaux 160 adjacents. Les conduits et canaux sont formés dans des surépaisseurs 165, 166 de la paroi 138. Les surépaisseurs 165 dans lesquelles sont formés les canaux 160 s'étendent radialement vers l'extérieur depuis la surépaisseur 168 dans laquelle est formée la gorge 158. Les surépaisseurs 166 dans lesquelles sont formés les conduits 162 s'étendent radialement entre la surépaisseur 168 et des bossages 170 de la paroi 138 dans lesquels sont formés les orifices 146.

Chacun des canaux 160 communique à son extrémité radialement externe avec une extrémité longitudinale d'un gicleur tubulaire 172 visible notamment aux figures 4 et 5. Les gicleurs 172 ont une forme allongée et s'étendent parallèlement à l'axe A. Ils sont au nombre de cinq et régulièrement répartis autour de l'axe A en étant chacun disposés entre deux axes 148 adjacents. Ils sont montés par translation axiale à travers des orifices traversants de la paroi 138. Ils comprennent chacun une cavité interne longitudinale 174 dont une extrémité longitudinale est en communication fluidique avec un canal 160. Chaque gicleur 172 comprend en outre des orifices 176 sensiblement radiaux, répartis sur sa longueur, qui débouchent dans la cavité 174. Le lubrifiant amené par les canaux 160 jusqu'aux gicleurs 172 est destiné à être pulvérisé sur les dentures des satellites 150 et du solaire 151 en fonctionnement (cf. flèches de la figure 5, ainsi que la figure 7).

Chacun des conduits 162 communique à son extrémité radialement externe avec une extrémité longitudinale d'un tube d'alimentation 178 visible à la figure 4. Les tubes 178 ont une forme allongée et s'étendent sensiblement radialement par rapport à l'axe A. Ils sont au nombre de cinq et régulièrement répartis autour de l'axe A en étant chacun engagé dans un alésage radial 180 traversant un bossage 170 et la surépaisseur 166 correspondante de la paroi 138. Les alésages 180 débouchent à leurs extrémités radialement externes sur la périphérie externe de la paroi 138 et les tubes 178 sont montés dans ces alésages par translation radiale depuis l'extérieur vers l'intérieur, jusqu'à ce que leurs extrémités radiales internes soient en communication fluidique avec les extrémités radialement externes des conduits 158, comme cela est visible à la figure 4. Des vis 182 sont alors vissées dans la paroi 138, et en particulier dans des orifices taraudés des bossages 170, pour immobiliser les tubes 178 dans les alésages 180. Une vis 182 peut traverser un orifice transversal 183 du tube 178 correspondant (figures 4 et 6). En variante, la vis 182 peut être remplacé par une goupille ou pion.

La figure 6 montre un tube 178. Ce tube 178 a une forme allongée et comprend une cavité longitudinale interne 184 dont une extrémité longitudinale débouche axialement et est destinée à être en communication fluidique avec un conduit 162. L'autre extrémité longitudinale du tube est fermée. Le tube comprend une fente longitudinale 186, sensiblement en son milieu, qui communique avec la cavité 184. En variante, la fente 186 peut être remplacée par un ensemble de perçages.

Des joints annulaires d'étanchéité 188 sont avantageusement prévus autour du tube. Un ou des premiers joints peuvent être situés à l'extrémité longitudinale ouverte du tube et destinés à coopérer avec la paroi 138, et d'autres joints peuvent être situés de part et d'autre de la fente 186 (ou des perçages), respectivement, et destinés à coopérer avec l'axe 148 correspondant (cf. figure 4). La fente 186 (ou les perçages) est destinée à déboucher dans la cavité 152 de cet axe 148 en vue de l'alimentation en lubrifiant de l'axe 148 et du palier 149. Le lubrifiant amené par les conduits 162 jusqu'aux tubes 178 est destiné à être injecté dans les cavités 152, puis à s'écouler à travers les conduits 154 jusqu'à la périphérie des paliers 149 (cf. flèches de la figure 4).

Dans l'exemple représenté, chaque tube 178 traverse également un couvercle annulaire 189 rapporté et fixé, par exemple par des vis, sur la paroi 138, du côté opposé aux satellites 150. Chaque couvercle 189 recouvre le bossage 170 correspondant de la paroi 138 et est destiné à centrer l'axe 148 correspondant dans l'orifice 146 de la paroi 138.

La figure 7 montre les moyens d'alimentation en lubrifiant de la gorge 158, qui comprennent une série d'injecteurs 190, par exemple au nombre de cinq, qui sont disposés autour de l'axe A et traversent l'ouverture 144 de la paroi 138 de la cage 134. Les injecteurs 190 sont portés par un stator et pulvérisent du lubrifiant radialement vers l'extérieur directement dans la gorge 158, qui va ensuite s'écouler dans les canaux 160 et conduits 162, comme évoqué dans ce qui précède.

L'invention présente de nombreux avantages par rapport à la technique antérieure : un encombrement axial réduit, la suppression d'une pièce de fraisage (rouet) compliquée à usiner du fait de la cage qui est plus facile à usiner par tournage, moins d'hyperstatisme au montage, plus de problème de *fretting* dans le rouet, la possibilité de rapprocher les gicleurs du solaire, la rigidité augmentée du porte-satellites, les gicleurs plus courts et plus légers (moins de problèmes en dynamique), etc.

## Revendications

1. Porte-satellites (130) pour un réducteur de vitesse à train épicycloïdal de turbomachine, ledit porte-satellites comprenant une cage (134) définissant un espace interne de montage d'un solaire central (151) d'axe A de rotation et d'une rangée annulaire de satellites (150) disposés autour de l'axe A et engrenés avec ledit solaire, ledit solaire comportant des moyens d'accouplement à un premier arbre, ladite cage comportant deux parois annulaires (136, 138) parallèles centrées sur ledit axe A et une paroi cylindrique (140) reliant lesdites parois annulaires à leur périphérie externe, une première (136) desdites parois annulaires étant reliée à un corps (142) cylindrique comportant des moyens d'accouplement à un second arbre, **caractérisé en ce qu'**une seconde (138) desdites parois annulaires est formée d'une seule pièce avec des moyens de lubrification (158, 160, 162), qui comprennent une gorge annulaire (158) de réception d'huile formée dans ladite seconde paroi et s'étendant à la périphérie d'une ouverture centrale (144) centrée sur l'axe A de la seconde paroi, ladite gorge annulaire débouchant radialement vers l'intérieur.

2. Porte-satellites (130) selon la revendication 1, dans lequel lesdits moyens de lubrification (158, 160, 162) sont formés dans au moins une surépaisseur axiale (165, 166, 168) de ladite seconde paroi annulaire (138).

3. Porte-satellites (130) selon l'une des revendications précédentes, dans lequel ladite gorge (158) est en communication fluidique avec des canaux (160) et des conduits (162) formés dans ladite seconde paroi (138) et s'étendant radialement vers l'extérieur depuis ladite gorge.

4. Porte-satellites (130) selon la revendication précédente, dans lequel lesdits canaux (160) ont leurs extrémités radialement externes qui sont raccordées à des extrémités longitudinales de gicleurs de lubrifiant (172), lesdits gicleurs de lubrifiant s'étendant parallèlement audit axe A.

5. Porte-satellites (130) selon la revendication 3 ou 4, dans lequel lesdits conduits (162) ont leurs extrémités radialement externes qui sont raccordées à des extrémités radiales internes de tubes (178) d'alimentation en lubrifiant desdits satellites (150).

6. Porte-satellites (130) selon la revendication précédente, dans lequel chacun desdits tubes (178) est monté dans un alésage radial (180) de ladite seconde paroi (138) et traverse un axe (148) de support d'un desdits satellites (150).

7. Porte-satellites (130) selon la revendication précédente, dans lequel chacun desdits tubes (178) comprend une fente longitudinale (184) ou un ensemble de perçages en communication avec une cavité interne (152) dudit axe de support (148).

8. Porte-satellites (130) selon la revendication 6 ou 7, dans lequel chacun desdits tubes (178) traversent un couvercle (189) rapporté et fixé sur ladite seconde paroi (138), ledit couvercle supportant une extrémité longitudinale dudit axe de support (148).

9. Porte-satellites (130) selon la revendication précédente, dans lequel des ailettes (164) radiales sont disposées dans ladite gorge (158).

10. Turbomachine d'aéronef, **caractérisée en ce qu'**elle comprend un réducteur de vitesse à train épicycloïdal dont le porte-satellites (130) est tel que défini à l'une des revendications précédentes.

11. Turbomachine selon la revendication précédente, comprenant des moyens d'alimentation en lubrifiant de ladite gorge (158), qui comprennent une série d'injecteurs (190) qui sont disposés autour dudit axe (A) et qui traversent ladite ouverture (144).

12. Turbomachine selon la revendication précédente, dans laquelle lesdits injecteurs (190) sont configurés pour pulvériser du lubrifiant radialement vers l'extérieur directement dans ladite gorge (158).

## Patentansprüche

1. Planetenträger (130) für einen epizyklischen Drehzahlreduktor einer Turbomaschine, wobei der Planetenträger einen Käfig (134) umfasst, der einen Innenraum zur Montage eines zentralen Sonnenrades (151) mit einer Drehachse A und einer ringförmigen Reihe von Planetenrädern (150) definiert, die um die Achse A herum angeordnet sind und mit dem Sonnenrad in Eingriff stehen, wobei das Sonnenrad Mittel zur Kopplung mit einer ersten Welle umfasst, wobei der Käfig zwei parallele ringförmige Wände (136, 138) umfasst, die auf der Achse A zentriert sind, und eine zylindrische Wand (140), welche die ringförmigen Wände an deren Außenumfang verbindet, wobei eine erste (136) der ringförmigen Wände mit einem zylindrischen Körper (142) verbunden ist, der Mittel zur Kopplung mit einer zweiten Welle umfasst, **dadurch gekennzeichnet, dass** eine zweite (138) der ringförmigen Wände einstückig mit Mitteln zum Schmieren (158, 160, 162) ausgebildet ist, die eine ringförmige Nut (158) zur Aufnahme von Öl umfassen, die in der zweiten Wand ausgebildet ist und sich um den Umfang einer zentralen Öffnung (144) erstreckt, die auf der Achse A der zweiten Wand zentriert ist, wobei die ringförmige Nut radial nach innen mündet.

2. Planetenträger (130) nach Anspruch 1, wobei die Mittel zum Schmieren (158, 160, 162) in mindestens einer axialen Zugabe (165, 166, 168) der zweiten ringförmigen Wand (138) ausgebildet sind.

3. Planetenträger (130) nach einem der vorstehenden Ansprüche, wobei die Nut (158) in Fluidverbindung mit Kanälen (160) und Leitungen (162) steht, die in der zweiten Wand (138) ausgebildet sind und sich von der Nut aus radial nach außen erstrecken.

4. Planetenträger (130) nach dem vorstehenden Anspruch, wobei die Kanäle (160) ihre radial äußeren Enden mit Längsenden von Schmiermitteldüsen (172) verbunden haben, wobei sich die Schmiermitteldüsen parallel zu der Achse A erstrecken.

5. Planetenträger (130) nach Anspruch 3 oder 4, wobei die Leitungen (162) ihre radial äußeren Enden mit radial inneren Enden von Rohren (178) zur Zuführung von Schmiermittel der Planetenräder (150) verbunden haben.

6. Planetenträger (130) nach dem vorstehenden Anspruch, wobei jedes der Rohre (178) in einer radialen Bohrung (180) der zweiten Wand (138) angebracht ist und durch eine Trägerachse (148) eines der Planetenräder (150) hindurchgeht.

7. Planetenträger (130) nach dem vorstehenden Anspruch, wobei jedes der Rohre (178) einen Längsschlitz (184) oder eine Anordnung von Bohrungen in Verbindung mit einem inneren Hohlraum (152) der Trägerachse (148) umfasst.

8. Planetenträger (130) nach Anspruch 6 oder 7, wobei jedes der Rohre (178) durch eine Abdeckung (189) hindurchgeht, die an der zweiten Wand (138) aufgesetzt und befestigt ist, wobei die Abdeckung ein Längsende der Trägerachse (148) trägt.

9. Planetenträger (130) nach dem vorstehenden Anspruch, wobei in der Nut (158) radiale Rippen (164) angeordnet sind.

10. Flugzeugturbomaschine, **dadurch gekennzeichnet, dass** sie einen epizyklischen Drehzahlreduktor umfasst, dessen Planetenträger (130) nach einem der vorstehenden Ansprüche definiert ist.

11. Turbomaschine nach dem vorstehenden Anspruch, umfassend Mittel zur Zuführung von Schmiermittel der Nut (158), die eine Reihe von Injektoren (190) umfassen, die um die Achse (A) herum angeordnet sind und die durch die Öffnung (144) hindurchgehen.

12. Turbomaschine nach dem vorstehenden Anspruch, wobei die Injektoren (190) so konfiguriert sind, dass sie das Schmiermittel radial nach außen direkt in die Nut (158) sprühen.

## Claims

1. Planet carrier (130) for a speed-reducing unit with an epicyclic gear train for a turbine engine, said planet carrier comprising a cage (134) defining an internal space for mounting a central sun gear (151) of rotation axis A and an annular row of planet gears (150) arranged around the axis A and meshed with said sun gear, said sun gear comprising means for coupling to a first shaft, said cage comprising two parallel annular walls (136, 138) centred on said axis A and a cylindrical wall (140) connecting said annular walls at their external periphery, a first (136) of said annular walls being connected to a cylindrical body (142) comprising means for coupling to a second shaft, **characterised in that** a second (138) of said annular walls is formed of a single part with lubrication means (158, 160, 162) which comprise an annular groove (158) for receiving oil formed in said second wall and extending to the periphery of a central opening (144) centred on the axis A of the second wall, said annular groove opening out radially inwards.

2. Planet carrier (130) according to claim 1, wherein said lubrication means (158, 160, 162) are formed in at least one axial excess thickness (165, 166, 168) of said second annular wall (138).

3. Planet carrier (130) according to one of the preceding claims, wherein said groove (158) is in fluidic communication with channels (160) and ducts (162) formed in said second wall (138) and extending radially outwards from said groove.

4. Planet carrier (130) according to the preceding claim, wherein the radially external ends of said channels (160) are connected to longitudinal ends of lubricant nozzles (172), said lubricant nozzles extending parallel to said axis A.

5. Planet carrier (130) according to claim 3 or 4, wherein the radially external ends of said ducts (162) are connected to internal radial ends of tubes (178) for supplying lubricant to said planet gears (150).

6. Planet carrier (130) according to the preceding claim, wherein each of said tubes (178) is mounted in a radial bore (180) of said second wall (138) and passes through an axis (148) for supporting one of said planet gears (150).

7. Planet carrier (130) according to the preceding claim, wherein each of said tubes (178) comprises a longitudinal slot (184) or a set of bores in communication with an internal cavity (152) of said support axis (148).

8. Planet carrier (130) according to claim 6 or 7, wherein each of said tubes (178) passes through a cover (189) provided and fixed on said second wall (138), said cover supporting a longitudinal end of said support axis (148).

9. Planet carrier (130) according to the preceding claim, wherein radial fins (164) are arranged in said groove (158).

10. Aircraft turbine engine, **characterised in that** it comprises a speed-reducing unit with an epicyclic gear train, of which the planet carrier (130) is such as defined in one of the preceding claims.

11. Turbine engine according to the preceding claim, comprising means for supplying lubricant to said groove (158), which comprise a series of injectors (190) arranged around said axis (A) and passing through said opening (144).

12. Turbine engine according to the preceding claim, wherein said injectors (190) are configured to spray lubricant radially inwards directly into said groove (158).
